# EUROPEAN PATENT SPECIFICATION

(11) **EP 1 492 248 B1**
(45) Date of publication and mention of the grant of the patent: **12.03.2008**
(21) Application number: 03706209.8
(22) Date of filing: 27.01.2003
(51) Int. Cl.: H04B 7/00, H04B 7/26

(54) **A METHOD ABOUT HIGH SPEED TRANSMITTING DATA SERVICE BASED TDD MODE**
VERFAHREN ÜBER DAS SCHNELLE ÜBERTRAGEN VON DATENDIENSTEN AUF DER BASIS DES TDD-MODUS
PROCEDE CONCERNANT LE SERVICE DE TRANSMISSION DE DONNEES HAUTE VITESSE A MODE TTD

(30) Priority: 03.04.2002 CN 02116534
(43) Date of publication of application: 29.12.2004
(73) Proprietor: Huawei Technologies Co., Ltd., Shenzhen, Guangdong 518057 (CN)
(72) Inventor: SUN, Lixin Intellectual Property Department, Shenzhen Guangdong 518057 (CN); ZHOU, Lei Intellectual Property Department, Shenzhen Guangdong 518057 (CN)
(74) Representative: Reyier, Ann-Mari
(86) International application number: PCT/CN2003/000076
(87) International publication number: WO 2003/084088

(56) References cited:
- EP-A- 0 713 347
- WO-A-02/097476
- CN-A- 1 296 364
- DE-A1- 19 842 039
- US-A- 5 159 331
- US-A- 6 097 707
- US-A- 6 130 886
- US-A- 6 141 336

## Description

### Field of the Invention

The present invention relates to a TDD-based (Time Division Duplex-based) method for transmitting traffics in wireless communication systems, particularly to a method for transmitting high-speed data.

### Background of the Invention

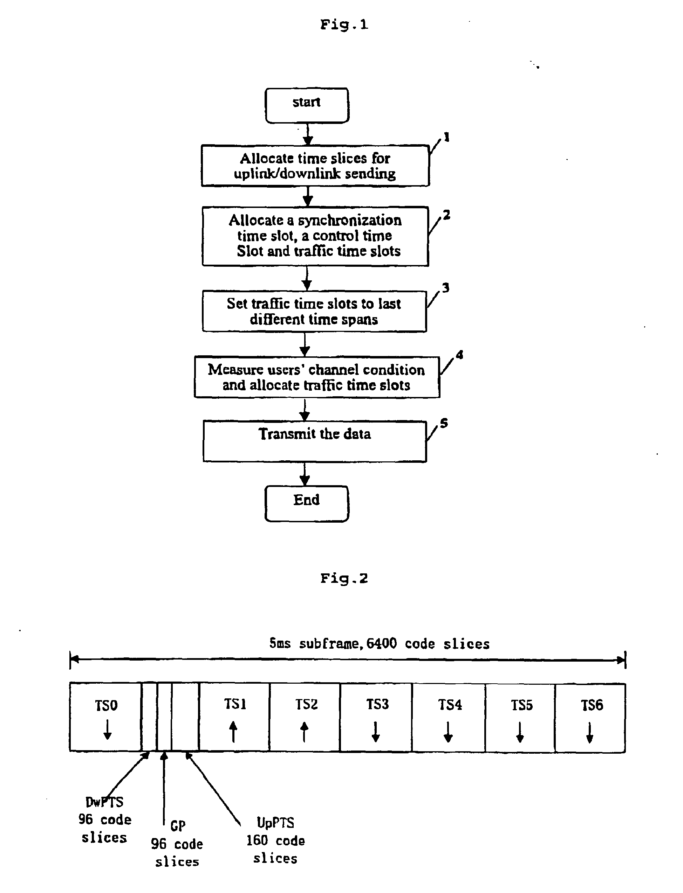

In today's TDD-based 3G wireless communication systems, such as TD-SCDMA systems, traffics are usually transmitted with the following method: 96-code slice DwPTS (Downlink Pilot Time Slot) is utilized to implement downlink receiving synchronization; UpPTS (Uplink Pilot Time Slot) with 96-code slice GP (Guard Period) is utilized to implement uplink receiving synchronization; finally, traffic time slots lasting the same time spans are utilized to provide traffic transmission for different users. The time slot structure employed in above method is shown in Fig.2, which illustrates the time slot structure of a 5ms sub-frame in TD-SCDMA. In Fig.2, besides three special time slots (DwPTS, GP, and UpPTS) for synchronization, all of the remaining 7 traffic time slots (including two uplink time slots (TS1 and TS2) and 5 downlink time slots (TS0, TS3, TS4, TS5, and TS6)) last 0.675ms respectively. fixed-time span time slot frame structure shown in Fig.2 is adapted to voice services that requires high real-time performance and low transmission rate; with above time slot structure, the conventional method can ensure available appropriate resources for voice services at any time. However, such a method is not applicable to data services that require low real-time performance but variable transmission rate.

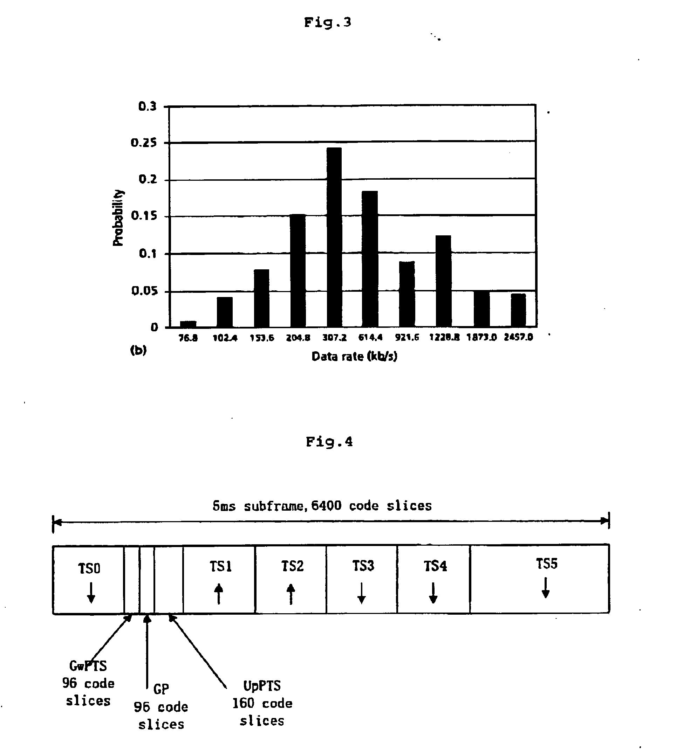

The reason is: in actual traffic transmission, due to the affect of radio fade in the transmission channel as well as different user distances to the base station in a cell, the maximum data transmission rate that can be received normally by a user terminal is different in a cell. The document CDMA/HDR: A bandwidth-efficient high-speed wireless data service for nomadic users (P Bender, P Black, M Grob, R Padovani N Sindhushayana and Andrew Viterbi, IEEE Commun Mag, July, 2000: 70-77) provides a statistical result of different maximum data transmission rates supported in a cell, from which the above fact can be seen (see Fig.3). The horizontal ordinate in Fig.3 represents the supported maximum data transmission rates (unit: KB/s); the vertical coordinate represents the probability of the case in which the user terminal is at a certain transmission rate, or it can be understood as the percentage of the user terminals supporting a certain data transmission rate to all user terminals. It is seen from Fig.3 that the data transmission rate supported by a user terminal is variable. When the conventional method is used to transmit data of different users, since the data is transmitted in time slots of the same length, high-speed user terminals have to wait due to limitation of time slot length after a segment of data is transmitted qui ckly; while low speed user terminals are allocated time slots of the same length. Since the conventional method doesn't utilize the features that the transmission rates of different user data services are different and data services don't require high real-time performance, along with limitation of channel condition and other conditions, certain frequency spectrum efficiency loss is inevitable in data service transmission, resulting resource waste; therefore, the communication has to be carried out at a extremely low rate. In addition, the time slot structure employed in the conventional method is independent, i.e., each time slot is configured with a separate pilot. For customers demanding high data rate, high-speed data communication can only be implemented through allocating more time slots; therefore duplicated pilot part can not be used to transmit service data, resulting in time waste substantially and bring adverse effect to high-speed data transmission.

D1 (DE 198 42 039 A1) discloses a high speed TDD-based mehtod of transmission in which time slots are alloacted for data transmission, slots are allocated for uplink and downlink transmission. Slots are dedicated to signalisation transmission, like control information or synchronisation information.

D2 (US 6,097,707 A) discloses a method of time division duplex transmission in which time slots are used for uplink and downlink transmission. In the up-link phase of a cycle time, a variable number of fixed size data transfer time slots are used for data transmission.

See as well EP-A-0713347 (ATT).

### Summary of the Invention

An object of the present invention is to provide an efficient TDD-based method for transmitting high-speed data, which improves transmission rate and spectrum utilization and reduces operating costs.

To attain said object, the TDD-based method for transmitting high-speed data comprises:
(1) allocating time slices for uplink sending and downlink sending in a time frame, respectively;
(2) in the uplink sending time slice and the downlink sending time slice, allocating a synchronization time slot for uplink synchronization and a synchronization time slot for downlink synchronization, a control time slot for transmitting uplink signaling and a control time slot for transmitting downlink signaling, and a plurality of traffic time slots for transmitting high-speed data, respectively;
(3) setting at least one of the traffic time slots to last variable time span;
(4) allocating the at least one traffic time slot lasting variable time span for users, and then transmitting the data.

Said synchronization time slot, control time slot, and traffic time slots in step (2) are not overlapped in time.

Said synchronization time slot for uplink synchronization and said synchronization time slot for downlink synchronization in step (2) may be one or more as required, respectively.

Said control time slot for transmitting uplink signaling and said control time slot for downlink signaling in step (2) may be one or more as required, respectively.

In step (4), traffic time slots lasting corresponding time span can be allocated for users according to measured user channel condition, according to specified QoS (Quality of Service) condition, or according to both of them.

Since the present invention employs variable-length time slot structure, the communications system can provide services at different data rate in the same frame (sub-frame) . Compared to the conventional data transmission method, the number of code slices for a service data is specified because the service data transmission time span of a time slot is specific; therefore, the number of data bits that are transmitted in a frame (sub-frame) is specific, so that different user demands can be met. For example, when there are users with different service levels, the requirement for high-speed data transmission can be met through allocating longer time slots for users with higher service levels; when there is only one service level, longer time slots can be allocated and data transmission modes with higher data rate (e.g., high order modulation) can be used for users with better channel condition, so that more bits can be transmitted in the same time period, in order to improve frequency spectrum efficiency and reduce operating costs. It is seen from above description that the present invention is much easier to meet the requirement of data transmissions of different service levels.

### Brief Description of the Drawings

Fig.1 is a flow chart according to an embodiment of a method of the present invention.
Fig.2 illustrates the fixed-time span time slot frame structure used in the conventional method.
Fig.3 is a statistical chart of user terminals supporting different maximum data transmission efficiencies in a cell.
Fig.4 is a schematic diagram of the variable-time span time slot frame structure that is applied to the embodiment shown in Fig.1.

### Detailed Description of the Embodiments

In a cellular wireless communication system, mobile users are usually distributed at different locations in a cell. The maximum data transmission rate that can be received normally by a user terminal in the cell is specific due to radio fade. On the premise of meeting required transmission error rate, the difference among maximum data transmission rates supported by most user terminals is not significant. However, the channel condition of some user terminals are better and support higher data transmission rates; while the channel condition of some other users are worse and can only support lower data transmission rates. Though the system capacity can be improved through reducing waiting time of user terminals supporting higher transmission rates, there is limitation on ratio of maximum waiting time/minimum waiting time in actual applications. To solve above problem, the present invention utilizes the fact that data services have no demanding requirement for real-time transmission to optimize frequency spectrum resource, i.e., more time slots are allocated to users with better channel condition to improve system capacity.

Hereunder the present invention is detailed with reference to the attached drawings.

Fig.1 is a flow chart of an embodiment implemented with the method described in the present invention. As shown in Fig.1, the present invention determines the data structure in a time frame for data transmission first and utilizes the data structure to transmit service data then. In detail, in step 1, time slices are allocated for uplink sending and downlink sending are allocated in a time frame respectively; the purpose of the step is to set the uplink/downlink time slice proportion suitable for actual service data transmission according to characteristics of uplink/downlink services. Since control (e.g., synchronization) is required for uplink/downlink transmission of service data, synchronization time slot for uplink synchronization and synchronization time slot for downlink synchronization, control time slot for transmitting uplink signaling and control time slot for downlink signaling, as well as several traffic time slot for transmitting high-speed data services are allocated in uplink sending and downlink sending in step 2.Thought both the synchronization time slot for uplink synchronization and the synchronization time slot for downlink synchronization are one time slot in the present embodiment, several time slots can be allocated as required in actual applications. Similarly, though both the control time slot for transmitting uplink signaling and the control time slot for transmitting downlink signaling are one time slot in the present embodiment, more time slots may be allocated as required in actual applications. Since broadband TDD frames are relatively long (e.g., 10ms) in broadband applications and the code slice rate is 3 times of that of TD-SCDMA applications, it is difficult to implement synchronization; therefore, several synchronization time slots may be required. That is to say, if the time frame is long, several synchronization time slots can facilitate synchronization. Similarly, in the case of long time frame, several times of transmission control signaling may be required; therefore several control time slots may be necessary.

Above synchronization time slots, control time slots, and traffic time slots are not overlapped with each other in time; the purpose is to reduce mutual interference among synchronization data, control data, and service data. Next, in step 3, different traffic time slots are set with different time spans to adapt to transmission demand of different service data.

Fig.4 is a schematic diagram of the variable-time span time slot frame structure that is applied to the embodiment shown in Fig.1. Through comparing the time slot structure in Fig.4 with the time slot structure in Fig.1, we can see that the last two time slots are combined into one time slot. Therefore, the original two pilots can be combined into one pilot, so that a pilot can be released for data transmission. In an environment with different service levels, the last time slot (TS5 in the figure) can provide more code slice resource for high-speed data service users to transmit service data. In addition, through allocating TS5 to a user with better channel condition, a transmission mode with higher efficiency (e.g., high order modulation) can be applied for transmission in entire TS5, so that the base station can issue more bits in the same time period; thus the system throughput is improved. Furthermore, long time slots can also improve coding efficiency (e.g., Turbo coding) . Based on above steps, the users' channel conditions are tested in step 4 during service data transmission and traffic time slots of appropriate time spans are allocated for different users according to tested channel conditions; finally, the users' data are transmitted in step 5. It is noted that traffic time slots of appropriate time spans can also be allocated for different users according to specified QoS condition or combinations of measured user channel condition and specified QoS condition.

## Claims

1. A Time Division Duplex-based method, called hereafter a TDD-based method, for transmitting high-speed data, **characterized in that** the method comprises:
allocating (1) time periods for uplink sending and downlink sending in a time frame, respectively;
in the uplink sending time period and the downlink sending time period, allocating (2) a synchronization time slot for uplink synchronization and a synchronization time slot for downlink synchronization, a control time slot for transmitting uplink signaling and a control time slot for transmitting downlink signaling, and a plurality of traffic time slots for transmitting high-speed data, respectively;
setting (3) at least one of the traffic time slots to last a variable time span;
allocating (4) the at least one traffic time slot lasting variable time span for users, and then transmitting (5) the data, wherein the synchronization time slot, the control time slot, and the traffic time slots are not overlapped in time.

2. The TDD-based method for transmitting high-speed data according to claim 1, wherein said step (2) of allocating said synchronization time slot for uplink synchronization and said synchronization time slot for downlink synchronization further comprising: allocating one synchronization time slot for uplink synchronization and one synchronization time slot for downlink synchronization.

3. The TDD-based method for transmitting high-speed data according to claim 1, wherein said step (2) of allocating said synchronization time slot for uplink synchronization and said synchronization time slot for downlink synchronization further comprising: allocating a plurality of synchronization time slots for uplink synchronization and a plurality of synchronization time slots for downlink synchronization.

4. The TDD-based method for transmitting high-speed data according to claim 1, wherein said step (2) of allocating said control time slot for transmitting uplink signaling further comprising: allocating one control time slot for transmitting uplink signaling.

5. The TDD-based method for transmitting high-speed data according to claim 1, wherein said step (2) of allocating said control time slot for transmitting downlink signaling further comprising: allocating one control time slot for transmitting downlink signaling.

6. The TDD-based method for transmitting high-speed data according to claim 1, wherein said step (2) of allocating said control time slot for transmitting uplink signaling and said control time slot for transmitting downlink signaling further comprising: allocating a plurality of control time slots for transmitting uplink signaling and a plurality of control time slots for transmitting downlink signaling.

7. The TDD-based method for transmitting high-speed data according to claim 1, wherein in step (4) of allocating the at least one traffic time slot lasting variable time span for users, one traffic time slot lasting corresponding time span is allocated for a user according to the measured user channel condition.

8. The TDD-based method for transmitting high-speed data according to claim 1, wherein in step (4) of allocating the at least one traffic time slot lasting variable time span for users, one traffic time slot lasting corresponding time span is allocated for a user according to specified QoS (Quality of Service) condition.

9. The TDD-based method for transmitting high-speed data according to claim 1, wherein in step (4) of allocating the at least one traffic time slot lasting variable time span for users, the traffic time slots lasting corresponding time spans are allocated for users according to both of the measured user channel condition and the specified QoS condition.

## Patentansprüche

1. Verfahren auf Zeitduplex-Basis, im Folgenden als Verfahren auf TDD-Basis bezeichnet, zum Übertragen von Daten mit hoher Datenrate, **dadurch gekennzeichnet, dass** das Verfahren umfasst:
Zuweisen (1) von Zeitdauern, jeweils zum Uplink-Senden und Downlink-Senden in einem Zeitrahmen;
in der Zeitdauer zum Uplink-Senden und in der Zeitdauer zum Downlink-Senden jeweils Zuweisen (2) eines Synchronisations-Zeitschlitzes für die Uplink-Synchronisation und eines Synchronisations-Zeitschlitzes für die Downlink-Synchronisation, eines Steuerungs-Zeitschlitzes zum Senden von Uplink-Signalisierung und eines Steuerungs-Zeitschlitzes zum Senden von Downlink-Signalisierung und einer Vielzahl von Verkehrs-Zeitschlitzen zum Senden von Daten mit hoher Datenrate;
Einstellen (3) mindestens eines der Verkehrs-Zeitschlitze auf eine variable Zeitdauer;
Zuweisen (4) des mindestens einen Verkehrs-Zeitschlitzes, der eine variable Zeitdauer dauert, an Benutzer, und dann Senden (5) der Daten, wobei sich der Synchronisations-Zeitschlitz, der Steuerungs-Zeitschlitz und die Verkehrs-Zeitschlitze zeitlich nicht überlappen.

2. Verfahren auf TDD-Basis zur Übertragung von Daten mit hoher Datenrate gemäß Anspruch 1, wobei der Schritt (2) der Zuweisung des Synchronisations-Zeitschlitzes für die Uplink-Synchronisation und des Synchronisations-Zeitschlitzes für die Downlink-Synchronisation ferner umfasst: Zuweisen eines Synchronisations-Zeitschlitzes für die Uplink-Synchronisation und eines Synchronisations-Zeitschlitzes für die Downlink-Synchronisation.

3. Verfahren auf TDD-Basis zur Übertragung von Daten mit hoher Datenrate gemäß Anspruch 1, wobei der Schritt (2) der Zuweisung des Synchronisations-Zeitschlitzes für die Uplink-Synchronisation und des Synchronisations-Zeitschlitzes für die Downlink-Synchronisation ferner umfasst: Zuweisen einer Vielzahl von Synchronisations-Zeitschlitzen für die Uplink-Synchronisation und einer Vielzahl von Synchronisations-Zeitschlitzen für die Downlink-Synchronisation.

4. Verfahren auf TDD-Basis zur Übertragung von Daten mit hoher Datenrate gemäß Anspruch 1, wobei der Schritt (2) der Zuweisung des Steuerungs-Zeitschlitzes für die Übertragung der Uplink-Signalisierung ferner umfasst: Zuweisen eines Steuerungs-Zeitschlitzes zum Senden von Uplink-Signalisierung.

5. Verfahren auf TDD-Basis zur Übertragung von Daten mit hoher Datenrate gemäß Anspruch 1, wobei der Schritt (2) der Zuweisung des Steuerungs-Zeitschlitzes für die Übertragung der Downlink-Signalisierung ferner umfasst: Zuweisen eines Steuerungs-Zeitschlitzes zum Senden der Downlink-Signalisierung.

6. Verfahren auf TDD-Basis zur Übertragung von Daten mit hoher Datenrate gemäß Anspruch 1, wobei der Schritt (2) der Zuweisung des Steuerungs-Zeitschlitzes für die Übertragung der Uplink-Signalisierung und des Steuerungs-Zeitschlitzes für die Übertragung der Downlink-Signalisierung ferner umfasst: Zuweisen einer Vielzahl von Steuerungs-Zeitschlitzen zum Senden der Uplink-Signalisierung und einer Vielzahl von Steuerungs-Zeitschlitzen zum Senden der Downlink-Signalisierung.

7. Verfahren auf TDD-Basis zur Übertragung von Daten mit hoher Datenrate gemäß Anspruch 1, wobei in Schritt (4) der Zuweisung des mindestens einen Verkehrs-Zeitschlitzes mit variabler Zeitdauer für Teilnehmer, ein Verkehrs-Zeitschlitz mit entsprechender Zeitdauer für einen Teilnehmer entsprechend der gemessenen Teilnehmer-Kanal-Bedingung zugewiesen wird.

8. Verfahren auf TDD-Basis zur Übertragung von Daten mit hoher Datenrate gemäß Anspruch 1, wobei in Schritt (4) der Zuweisung des mindestens einen Verkehrs-Zeitschlitzes mit variabler Zeitdauer für Teilnehmer, ein Verkehrs-Zeitschlitz mit entsprechender Zeitdauer für einen Teilnehmer entsprechend der spezifizierten QoS (Dienstgüte) zugewiesen wird.

9. Verfahren auf TDD-Basis zur Übertragung von Daten mit hoher Datenrate gemäß Anspruch 1, wobei in Schritt (4) der Zuweisung des mindestens einen Verkehrs-Zeitschlitzes mit variabler Zeitdauer für Teilnehmer die Verkehrs-Zeitschlitze, die entsprechende Zeiten dauern, für Teilnehmer entsprechend der gemessenen Teilnehmer-Kanal-Bedingung und der spezifizierten QoS (Dienstgüte) zugewiesen werden.

## Revendications

1. Procédé duplex à répartition dans le temps, désigné ci-après par procédé TDD de transmission de données à haut débit, ce procédé étant **caractérisé en ce qu'**il comprend :
l'attribution (1) de périodes de temps d'envoi sur liaison montante et d'envoi sur liaison descendante durant une tranche de temps, respectivement ;
durant la période de temps d'envoi sur liaison montante et la période de temps d'envoi sur liaison descendante, l'attribution (2) d'un intervalle de temps de synchronisation pour la synchronisation de liaison montante et d'une tranche de temps de synchronisation pour la synchronisation de liaison descendante, d'un intervalle de temps de contrôle pour transmettre la signalisation de liaison montante et d'un intervalle de temps de contrôle pour transmettre la signalisation de liaison descendante, et d'une pluralité d'intervalles de temps de trafic pour transmettre des données à haut débit, respectivement ;
le réglage (3) d'au moins un des intervalles de temps de trafic pour se prolonger pendant une durée de temps variable ;
l'attribution (4) de l'au moins un intervalle de temps de trafic pendant une durée de temps variable pour les utilisateurs, et puis la transmission (5) des données, dans lequel l'intervalle de temps de synchronisation, l'intervalle de temps de contrôle et les intervalles de temps de trafic ne sont pas superposées dans le temps.

2. Procédé TDD de transmission de données à haut débit selon la revendication 1, dans lequel ladite étape (2) d'attribution dudit intervalle de temps de synchronisation pour la synchronisation de liaison montante et dudit intervalle de temps de synchronisation pour la synchronisation de liaison descendante comprennent en outre : l'attribution d'un intervalle de temps de synchronisation pour la synchronisation de liaison montante et d'un intervalle de temps de synchronisation pour la synchronisation de liaison descendante.

3. Procédé TDD de transmission de données à haut débit selon la revendication 1, dans lequel ladite étape (2) d'attribution dudit intervalle de temps de synchronisation pour la synchronisation de liaison montante et dudit intervalle de temps de synchronisation pour la synchronisation de liaison descendante comprennent en outre : l'attribution d'une pluralité d'intervalles de temps de synchronisation pour la synchronisation de liaison montante et d'une pluralité d'intervalles de temps de synchronisation pour la synchronisation de liaison descendante.

4. Procédé TDD de transmission de données à haut débit selon la revendication 1, dans lequel ladite étape (2) d'attribution dudit intervalle de temps de contrôle pour transmettre la signalisation de liaison montante comprend en outre : l'attribution d'un intervalle de temps de contrôle pour transmettre la signalisation de liaison montante.

5. Procédé TDD de transmission de données à haut débit selon la revendication 1, dans lequel ladite étape (2) d'attribution dudit intervalle de temps de contrôle pour transmettre la signalisation de liaison descendante comprend en outre : l'attribution d'un intervalle de temps de contrôle pour transmettre la signalisation de liaison descendante.

6. Procédé TDD de transmission de données à haut débit selon la revendication 1, dans lequel ladite l'étape (2) d'attribution dudit intervalle de temps de contrôle pour transmettre la signalisation de liaison montante et dudit intervalle de temps de contrôle pour transmettre la signalisation de liaison descendante comprend en outre : l'attribution d'une pluralité de intervalles de temps de contrôle pour transmettre la signalisation de liaison montante et d'une pluralité de intervalles de temps de contrôle pour transmettre la signalisation de liaison descendante.

7. Procédé TDD de transmission de données à haut débit selon la revendication 1, dans lequel, durant l'étape (4) d'attribution de l'au moins un intervalle de temps de trafic durant un intervalle de temps variable pour les utilisateurs, un intervalle de temps de trafic durant un intervalle de temps correspondant variable est alloué pour un utilisateur selon l'état du canal d'utilisateur mesuré.

8. Procédé TDD de transmission de données à haut débit selon la revendication 1, dans lequel, durant l'étape (4) d'attribution de l'au moins un intervalle de temps de trafic pendant une durée de temps variable pour les utilisateurs, un intervalle de temps de trafic pendant une durée de temps correspondant est alloué pour un utilisateur selon l'état QoS (de qualité de service) spécifié.

9. Procédé TDD de transmission de données à haut débit selon la revendication 1, dans lequel, durant l'étape (4) d'attribution de l'au moins un intervalle de temps de trafic pendant une durée de temps variable pour les utilisateurs, des intervalles de temps de trafic pendant des durées de temps correspondants sont allouées pour les utilisateurs selon à la fois l'état du canal utilisateur mesuré et l'état QoS (de qualité de service) spécifié.
